# EUROPEAN PATENT APPLICATION

(11) **EP 1 653 044 A2**
(43) Date of publication of application: **03.05.2006**
(21) Application number: 05109496.9
(22) Date of filing: 12.10.2005
(51) Int. Cl.: E21B 47/12, H04L 29/06

(54) **System for communicating information between a rig location and a computer network and methods using the system**

(30) Priority: 29.10.2004 US 977506
(71) Applicant: WEATHERFORD/LAMB, INC., Houston Texas 77027 (US)
(72) Inventor: Koithan, Thomas, Houston, Texas 77095 (US); Young, Allen R., Houston, Texas 77070 (US); George, Geoff, Magnolia, Texas 77355 (US); Barry, Laurence, Busby, Alberta T0G 0H0 (CA); Lee, Bradley, Humble, Texas 77346 (US); Haugen, David, League City, Texas 77573 (US)
(74) Representative: Marchitelli, Mauro

(57) **Abstract**

A system for communicating information between a rig location and a computer network. The system includes the computer network disposed on a location remote from the rig location and a computer disposed on the rig location, wherein the computer is communicably linked to the computer network through a communication link.

## Description

### BACKGROUND OF THE INVENTION

### Field of the Invention

Embodiments of the present invention generally relate to a communication system, and more particularly, to a communication system between rig locations and the command center.

### Description of the Related Art

Complex industrial equipment can generally be found at wellsites, platforms, nuclear and fossil fuel power generating plants, oil refineries, petroleum and chemical processing plants, and manufacturing facilities. Because profits associated with such complex systems may run into the millions of dollars per day, the pressure to keep the systems operating continuously and efficiently is often immense. As a consequence, specialized service personnel are immediately dispatched when malfunctions or failures occur within the equipment, particularly when such malfunction or failure has slowed or shut down a major or important part of an overall operation. Further, many of these complex industrial equipment typically require periodic inspection, maintenance, and troubleshooting by service personnel.

Due to the complexity of the equipment involved, however, many service personnel often face technical problems in performing the tasks at hand. Accordingly, support personnel at the command center, such as engineers, technicians, specialists, and consultants, are often called upon to interact with the service personnel on the rig location. Such intervention often requires the support personnel to travel to the rig location, while the service personnel waits at the rig location until the support personnel arrives, which creates unnecessary delay in the repair or maintenance of the equipment.

Therefore, a need exists in the art for a method and system for communicating information between the command center and a rig location that improves the maintenance, repair and operation of equipment on the rig location.

### SUMMARY OF THE INVENTION

One or more embodiments of the invention are directed to a system for communicating information between a rig location and a computer network. The system includes the computer network disposed on a location remote from the rig location and a computer disposed on the rig location, wherein the computer is communicably linked to the computer network through a communication link.

One or more embodiments of the invention are also directed to a method for communicating information between a rig location and a computer network disposed on a location remote from the rig location. The method includes sending a signal to a computer within the computer network to request information, receiving the information from the computer within the computer network, and displaying the information at the rig location.

One or more embodiments of the invention are also directed to a method for displaying a graph indicating pressure difference between bottomhole pressure of a wellbore and formation pressure surrounding the wellbore. The method includes: receiving a bottomhole pressure inside the wellbore at a predetermined depth, comparing the bottomhole pressure with a formation pressure surrounding the wellbore at the predetermined depth, and displaying a graphical element indicating a pressure difference between the bottomhole pressure and the formation pressure.

One or more embodiments of the invention are also directed to a display for generating a graphical user interface. The display includes one or more graphical elements. Each graphical element indicates a pressure difference between a bottomhole pressure of a wellbore at a predetermined depth and a formation pressure surrounding the wellbore. At least one of the graphical elements represents at least one of an underbalanced condition, a balanced condition and an overbalanced condition.

One or more embodiments of the invention are also directed to a method for controlling a drilling operation. The method includes reviewing a display of one or more graphical elements. Each graphical element indicates a pressure difference between a bottomhole pressure of a wellbore at a predetermined depth and a formation pressure surrounding the wellbore. The method further includes identifying a trend on the graphical elements and generating a set of instructions based on the trend.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

Figure 1 illustrates a communication system for communicating information between a rig location and a computer network in accordance with one or more embodiments of the invention.

Figure 2 illustrates a schematic diagram of an offshore oil drilling system having the communication system illustrated in Figure 1 in accordance with one or more embodiments of the invention.

Figure 3 illustrates a flow diagram of a method for communicating with the command center in accordance with one or more embodiments of the invention.

Figure 4 illustrates a display that indicates pressure difference between bottomhole pressure of a wellbore and formation pressure surrounding the wellbore in accordance with one or more embodiments of the invention.

Figure 5 illustrates a flow diagram of a method for displaying a graph illustrating the pressure difference between bottomhole pressure of a wellbore and formation pressure surrounding the wellbore in accordance with one or more embodiments of the invention.

Figure 6 illustrates a flow diagram of a method for controlling a drilling operation in accordance with one or more embodiments of the invention.

### DETAILED DESCRIPTION

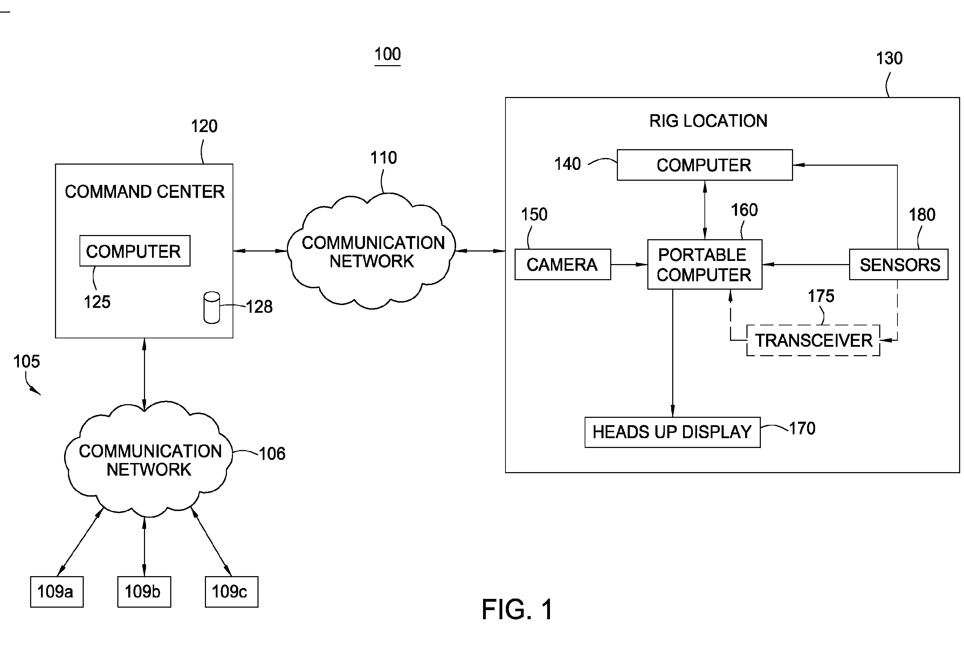

Figure 1 illustrates a communication system 100 for communicating information between a rig location 130 and a computer network 105 in accordance with one or more embodiments of the invention. The rig location 130 is communicably linked to the computer network 105 through a communication network 110. The computer network 105 may be connected to one or more other computer networks. The computer network 105 may include a command center 120, which may either be on shore or off shore. The rig location 130 may also be on shore or off shore. The computer network 105 is disposed on a location remote from the rig location 130. Although only one rig location is illustrated, other embodiments of the invention contemplate additional rig locations communicably linked to the command center 120 through the communication network 110. Although the communication system 100 is described with reference to its use in the oil and gas industry, other embodiments of the invention also contemplate the use of the communication system 100 in other industries, such as nuclear and fossil fuel power plants, oil refineries, petroleum and chemical processing plants, metal producing plants.

The communication network 110 may be a wireless network, a fiber optic network, or a satellite network. In an embodiment in which the communication network 110 is a satellite network, the communication network 110 may include a communications satellite, a link connecting the command center 120 to the satellite, and another link connecting the rig location 130 to the communications satellite. The communications satellite may be a geostationary satellite or a low earth orbit satellite (LEOS). Other details of the communications satellite may be found in commonly assigned United States Patent Application Serial No. 09/668,785 (Attorney Docket No. WEAT/0042), filed September 22, 2000, entitled METHODS AND APPARATUS FOR INTERACTIVE COMMUNICATION WITH SERVICE AND SUPPORT PERSONS, which is incorporated herein by reference.

The command center 120 may include a computer 125, which may be a general-purpose computer, a microprocessor, a micro-controller, or any other known type of computer. Computer 125 may include at least one central processing unit (CPU), support circuits, and memory. The CPU may include one or more conventionally available microprocessors. The support circuits may be well known circuits that include cache, power supplies, input/output interface circuitry and the like. The memory may include random access memory, read only memory, removable disk memory, flash memory, and various combinations of these types of memory. The memory may sometimes be referred to as main memory and may in part be used as cache memory. The memory may store an operating system and various software applications. The operating system maybe used to manage the operation of computer 125. Examples of the operating system include Microsoft Windows, UNIX, Apple OS X, and the like.

The computer 125 may be connected to a database 128 for storing information, such as desired information pertaining to various tools, machines and components used on the rig location 130 and instructional information for operating those tools, machines and components. Such desired information may include schematic diagrams, critical dimensions, calibration measurements, weights, shapes, parts checklists, and any other information that may be useful to a service personnel using the various tools, machines or components on the rig location 130. Instructional information may include images and video clips illustrating the operation of the tools, machines or components. Other details of desired information and instructional information may be found in commonly assigned United States Patent Application Serial No. 09/668,785 (Attorney Docket No. WEAT/0042), filed September 22, 2000, entitled METHODS AND APPARATUS FOR INTERACTIVE COMMUNICATION WITH SERVICE AND SUPPORT PERSONS, which is incorporated herein by reference.

The computer network 105 may further include a plurality of service computers 109a, 109b and 109c connected to the computer 125. Although three service computers are shown, any number may be used, and each service computer may be located at a different geographic location. The computer 125 may be connected to the service computers 109a, 109b, and 109c through a communication network 106, which may include the Internet or Intranet. Service personnel (not shown) may access the system 100 via any one of the service computers 109a, 109b, and 109c. Like the computer 125, each service computer 109 may be a general-purpose computer, a microprocessor, a micro-controller, or any other known type of computer. Each service computer 109 may include at least one central processing unit (CPU), support circuits, and memory. The CPU may include one or more conventionally available microprocessors. The support circuits may be well known circuits that include cache, power supplies, input/output interface circuitry and the like. The memory may include random access memory, read only memory, removable disk memory, flash memory, and various combinations of these types of memory. The memory may store an operating system and various software applications.

The rig location 130 may include a computer 140, which is generally configured to control various operations on the rig location 130. The computer 140 may be a general-purpose computer, a microprocessor, a micro-controller, or any other known type of computer. The computer 140 may include at least one central processing unit (CPU), support circuits, and memory. The CPU may include one or more conventionally available microprocessors. The support circuits may be well known circuits that include cache, power supplies, input/output interface circuitry and the like. The memory may include random access memory, read only memory, removable disk memory, flash memory, and various combinations of these types of memory. The memory may sometimes be referred to as main memory and may in part be used as cache memory. The memory may store an operating system and various software applications.

The computer 140 is connected to a portable computer, such as a handheld computer or personal digital assistant ("PDA") 160. The computer 140 is connected to the PDA 160 through a wireless communication network, such as Bluetooth or WiFi. The computer 140 may be connected to the computer 125 at the command center 120 through the communication network 110. In one embodiment, the PDA 160 is connected to the computer 125 at the command center 120 through the communication network 110. In another embodiment, the PDA 160 is connected to the computer 125 through the computer 140. A PDA 160 is generally a handheld device that combines computing, telephone/fax, Internet and networking features. A typical PDA 160 can function as a cellular phone, fax sender, Web browser and personal organizer. In one embodiment, the PDA 160 is intrinsically safe, e.g., explosion proof.

The PDA 160 may be connected to a camera 150, a heads up display 170 and one or more sensors 180. The camera 150 may be a conventional analog camera or a digital camera. The camera 150 may have the capability of capturing video information. The camera 150 may be used to capture an image or a video of a part, tool or machine in question. In one embodiment, the PDA 160 may include the camera 150. The heads up display 170 provides a hands free access to information, including images and the Internet. The heads up display 170 may also include an audio device for listening to audio information. The camera 150 and the heads up display 170 may be attached to a hard hat using an attaching means, such as a removable clip, epoxy, fastener, adhesive, or VELCRO™ fabric. Other details of the hard hat may be found in commonly assigned United States Patent Application Serial No. 09/668,785 (Attorney Docket No. WEAT/0042), filed September 22, 2000, entitled METHODS AND APPARATUS FOR INTERACTIVE COMMUNICATION WITH SERVICE AND SUPPORT PERSONS, which is incorporated herein by reference.

In one embodiment, the PDA 160, the camera 150 and the heads up display 170 may be used as part of a wireless video conference equipment. As such, the communication system 100 may be used to provide real time communication between the service personnel on the rig location 130 and the support personnel at the command center 120.

The sensors 180 are configured to capture temperature, pressure, flow, torque and turn information. As such, each sensor 180 may be a pressure sensor, a temperature sensor or a flow meter. In one embodiment, the sensors 180 are connected to the PDA 160 through a wireless transceiver 175. The camera 150, the heads up display 170 and the sensors 180 may communicate with the PDA 160 through a wireless network, such as Bluetooth or WiFi. In one embodiment, the camera 150, the heads up display 170 and the sensors 180 may communicate with the PDA 160 through the computer 140.

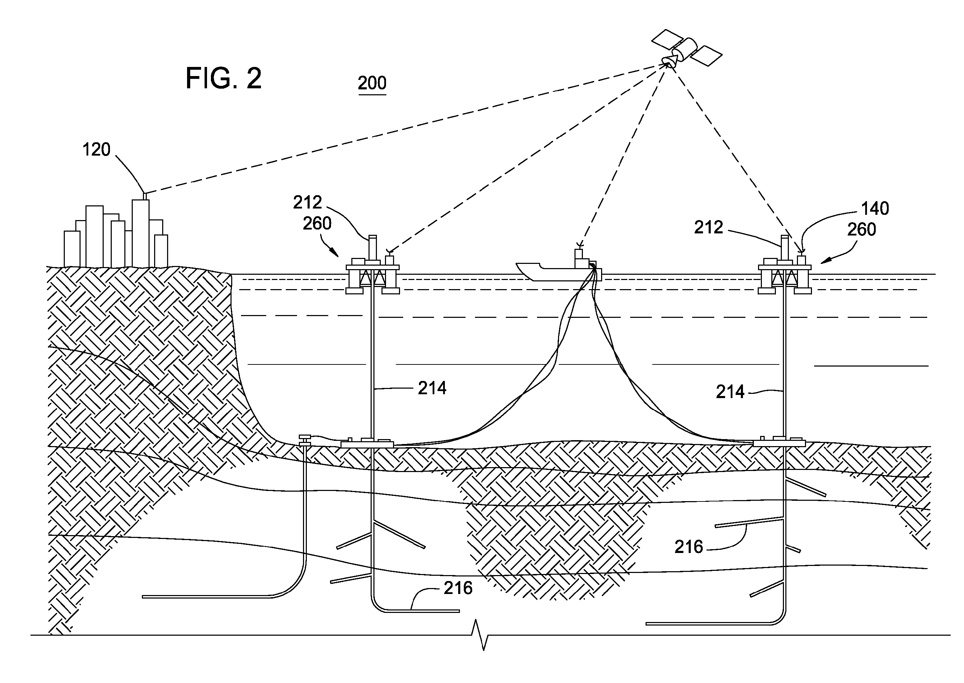

Figure 2 illustrates a schematic diagram of an offshore oil drilling system 200 having the communication system 100 in accordance with one or more embodiments of the invention. Each well platform 260 is typically associated with a plurality of well pipes that extend from the platform through water to the ocean floor and then downwardly into formations under the ocean floor. Although the invention is illustrated in relation to offshore platforms, other embodiments of the invention contemplate that the invention could also be utilized with land based wells.

Each platform 212 is typically associated with a plurality of wells 214, wherein each well 214 is divided into a plurality of separate production zones 216. Each production zone isolates specific areas of a well for purposes of producing selected fluids, preventing blowouts, and avoiding water intake. Such zones 216 may be positioned in a single vertical well, or result when portions of different wells are located in a common region. The oilfield depicted in Figure 2 includes features of well production such as the drilling and completion of lateral or branch wells that extend from a particular primary wellbore. These lateral or branch wells can be completed such that each lateral well constitutes a separable production zone and can be isolated for selected production. Each well 214 can include a plurality of production zones 216 that are monitored and/or controlled for efficient production and management of the well fluids.

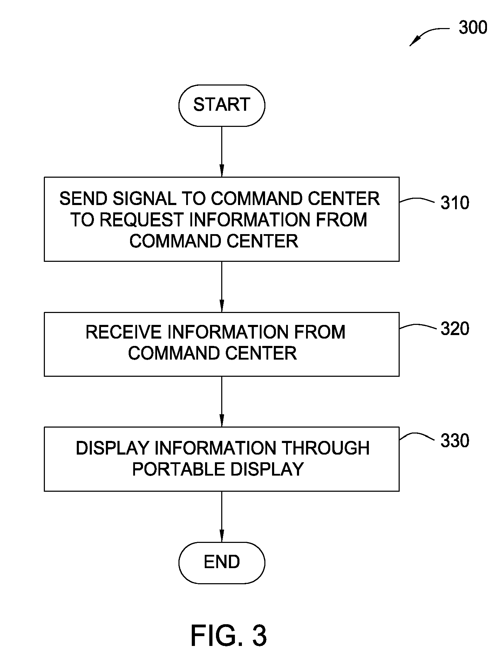

Figure 3 illustrates a flow diagram of a method 300 for communicating with the command center 120 in accordance with one or more embodiments of the invention. At step 310, a signal is sent to the computer 125 at the command center 120. In one embodiment, the signal is sent by a service personnel on the rig location 130 through the computer 140. The signal may include a request for information regarding a particular tool, part or machine on the rig location 130. The signal may be textual, audio, or video. For example, the service personnel may have a question regarding a particular tool during an underbalanced drilling operation. As such, the service personnel may transmit his question or request for information to the support personnel at the command center 120 through a text signal using the PDA 160 or through an audio signal using the audio device of the heads up display 170. The service personnel may also send an image or a video to the command center 120 through the use of the camera 150. For instance, the service personnel may capture an image of a part or a machine that is in question and send that image to the computer 125 at the command center.

At step 320, the information requested at step 310 is received. The information may include audio, video or text, such as an assembly drawing of a part or machine, critical dimensions of the part of the machine, a video of an installation procedure, a training session, or whatever information is necessary to assist the service personnel to perform the task at hand.

At step 330, the information requested is displayed through a portable display, e.g., the heads up display 170 or the PDA 160.

In addition to providing a means for service personnel at the rig location 130 to have access to the computer network 105, the communication system 100 may also be used to gather information from the rig location 130. For instance, the sensors 180 may be used to obtain temperature, pressure, flow, torque and turn information, which may be forwarded to the computer 125 at the command center 120 through the PDA 160 and the communication network 110. In response, the support personnel at the command center 120 may use the gathered information in determining a set of instructions for the service personnel at the rig location 130. In one embodiment, the gathered information may be used to generate a graph that will assist the support personnel analyze a particular operation. For instance, if the gathered information is bottomhole pressure of a well bore, the information may be used to generate a graph or display that indicates pressure difference between the bottomhole pressure and the formation pressure surrounding the wellbore. This display may then be used to formulate a set of instructions to assist the service personnel with the particular operation.

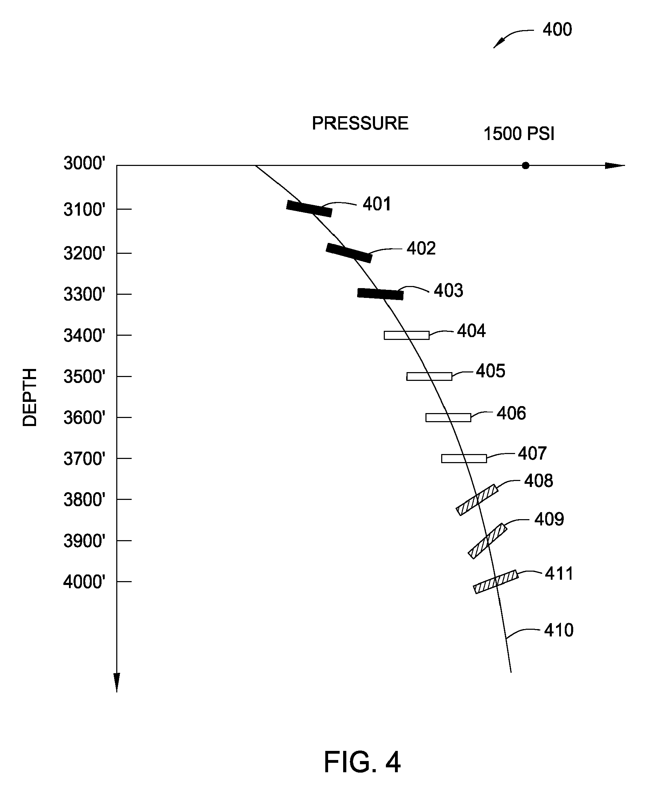

Figure 4 illustrates a display 400 that indicates pressure difference between bottom hole pressure of a well bore and formation pressure surrounding the wellbore in accordance with one or more embodiments of the invention. In one embodiment, the display 400 is used in connection with underbalanced operations. In another embodiment, the display 400 is three dimensional.

Bottomhole pressure is generally defined as the pressure at the bottom of a wellbore. Bottomhole pressure may be measured by bottomhole sensors during drilling, such as measurements-while-drilling (MWD). Bottomhole pressure may also be calculated using various parameters, such as mud weight in pounds per gallon, fluid column, mud column, depth and the like. Although one or more embodiments of the invention are described with reference to bottomhole pressure, other embodiments may contemplate other wellbore pressure, including dynamic friction pressure.

Formation pressure may include pore pressure and fracture pressure. Formation pressure may depend on hydrostatic pressure. Although one or more embodiments of the invention are described with reference to formation pressure, other embodiments may contemplate other types of pressure associated with formations surrounding a wellbore.

The display 400 has depth as the vertical axis and pressure as the horizontal axis. In one embodiment, the depth increases in a downward direction, while the pressure increases in a rightward direction. The display 400 provides an indication of pressure difference between the bottomhole pressure of a well bore and the formation pressure surrounding the well bore from a depth of about 3000 feet and 4000 feet. More specifically, the display 400 illustrates a bottomhole pressure curve 410 with an indication at each depth as to whether the bottomhole pressure is less than, substantially equal to, or greater than the formation pressure. As shown in Figure 4, each pressure difference is represented by a graphical element, such as a bar, circle or bullet. Although various embodiments of the invention are described with reference to a bar, circle or bullet, other embodiments contemplate graphical elements having other geometrical shapes.

As known by persons with ordinary skill in the art, a bottomhole pressure that is less than the formation pressure indicates an underbalanced condition, a bottomhole pressure that is substantially equal to the formation pressure indicates a balanced condition and a bottomhole pressure that is greater than the formation pressure indicates an overbalanced condition. In one embodiment, a green graphical element indicates an underbalanced condition, a yellow graphical element indicates a balanced condition and a red graphical element indicates an overbalanced condition. Due to the black and white color limitation in the drawings, the color green is illustrated as black, the color yellow is illustrated as white and the color red is illustrated with cross hatchings. Although one or more embodiments of the invention are described with reference to the color green, white and red, other embodiments contemplate other colors to indicate the various conditions.

As shown in Figure 4, the drilling condition at 3100 feet, 3200 feet and 3300 feet is indicated by black graphical elements 401, 402 and 403, which correspond to an underbalanced condition. The drilling condition at 3400 feet, 3500 feet, 3600 feet and 3700 feet is indicated by white graphical elements 404, 405, 406 and 407, which correspond to a substantially balanced condition. The drilling condition at 3800 feet, 3900 feet and 4000 feet is indicated by cross hatched graphical elements 408, 409 and 411, which correspond to an overbalanced condition.

In one embodiment, the display 400 may also include additional colors to provide additional granularity for each condition. For instance, an underbalanced condition with a pressure difference greater than a predetermined pressure may be represented by a dark green graphical element, while an underbalanced condition with a pressure difference less than the predetermined pressure may be represented by a light green graphical element. Similarly, an overbalanced condition with a pressure difference greater than a predetermined pressure may be represented by a dark red graphical element, while an overbalanced with a pressure difference less than the predetermined pressure may be represented by a pink graphical element. The various colors described herein are used for illustrative purposes only. One or more embodiments of the invention contemplate other colors to illustrate the varying pressure differences between bottomhole pressure and formation pressure.

In another embodiment, in addition to having a particular color (e.g., green), each bar graphical element may be illustrated with a slope. For instance, a bar with a slope less than zero indicates an underbalanced condition, a bar with a slope equal to zero indicates a substantially balanced condition and a bar with a slope greater than zero indicates an overbalanced condition. Further, the steepness of the slope may indicate the extent of the pressure difference between the bottomhole pressure and the formation pressure, i.e., the greater the pressure difference, the steeper the slope.

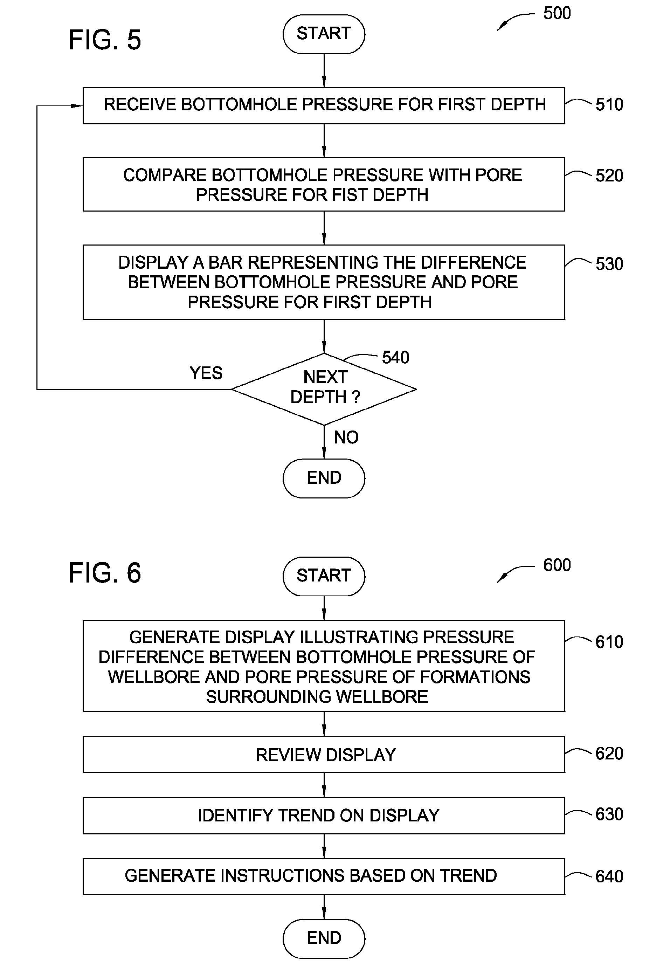

Figure 5 illustrates a flow diagram of a method 500 for displaying a graph indicating the pressure difference between bottomhole pressure of a wellbore and formation pressure surrounding the wellbore in accordance with one or more embodiments of the invention. In one embodiment, method 500 is used in connection with an underbalanced operation, e.g., drilling. At step 510, the bottomhole pressure inside a wellbore for a first depth is received. In one embodiment, the bottomhole pressure is measured during drilling, e.g., measurements-while-drilling (MWD). In another embodiment, the bottomhole pressure may also be calculated using various parameters, such as mud weight in pounds per gallon, fluid column, mud column, depth, pump velocity and the like.

At step 520, the bottomhole pressure at the first depth is compared with the formation pressure at the first depth. The formation pressure may be previously measured or calculated using geological or stratographical information acquired during an exploration phase. The formation pressure values may be stored in the database 128.

At step 530, a graphical element representing the difference between the bottomhole pressure and the formation pressure at the first depth is illustrated. If the bottomhole pressure at the first depth is less than the formation pressure, then the graphical element is illustrated with a green color, indicating an underbalanced condition. If the bottomhole pressure at the first depth is equal to the formation pressure, then the graphical element is illustrated with a yellow color, indicating a balanced condition. If the bottomhole pressure at the first depth is greater than the formation pressure, then the graphical element is illustrated with a red color, indicating an overbalanced condition.

In one embodiment, the graphical element that has a shape of a bar may have a slope. If the bottomhole pressure is substantially equal to the formation pressure, then the bar has a zero slope, indicating a substantially balanced condition. If the bottomhole pressure is less than the formation pressure, then the bar has a negative slope, indicating an underbalanced condition. If the bottomhole pressure is greater than the formation pressure, then the bar has a positive slope, indicating an overbalanced condition. Further, the steepness of the slope may vary depending on the amount of the difference between the bottomhole pressure and the formation pressure. Thus, the greater the difference between the bottomhole pressure and the formation pressure, the steeper the slope will be.

In another embodiment, graphical elements representing varying amounts of pressure difference may be illustrated with different colors. For instance, a graphical element representing a pressure difference greater than a predetermined amount may have a darker color than a graphical element representing a pressure difference less than the predetermined amount. Details of the various color configuration are described above with reference to Figure 4.

At step 540, a determination is made as to whether processing should continue at the next depth. If the answer is in the affirmative, then processing returns to step 510, at which the bottomhole pressure at the next depth is received. In one embodiment, method 500 continues until the underbalanced operation, e.g., drilling, of the wellbore is completed.

Figure 6 illustrates a flow diagram of a method 600 for controlling a drilling operation, e.g., underbalanced drilling operation, in accordance with one or more embodiments of the invention. Method 600 is an example of how the communication system 100 enables a support personnel at the command center to provide his/her expertise to a service personnel without having to be physically present on the rig location 130. At step 610, a display indicating the pressure difference between bottomhole pressure of a well bore and formation pressure surrounding the wellbore at a predetermined depth is generated. The display is described in more detail in the above paragraphs with reference to Figure 4. The method for generating such a display is described in more detail in the above paragraphs with reference to Figure 5.

At step 620, the display is reviewed. The display may be reviewed by the support personnel at the command center or the service personnel on the rig location. The display may be viewed on a display associated with the computer 125 or the PDA 160.

At step 630, a trend is identified on the display. In one embodiment, the trend is identified based on the color and the slope of each bar representing the pressure difference. As mentioned above, a bar with a green color and a negative slope may indicate an underbalanced condition, a bar with a yellow color and a zero slope may indicate a balanced condition, and a bar with a red color and a positive slope may indicate an overbalanced condition. A trend may be identified within an underbalanced condition or an overbalanced condition by reviewing the slope of each bar. A decreasing slope within an underbalanced condition may indicate a change of condition from underbalanced to balanced or overbalanced. For instance, as bar 402 transitions to bar 403, the slope of bar 403 decreases from the slope of bar 402. (See Figure 4). This decrease in slope may provide a trend that the underbalanced condition represented by bars 401, 402 and 403 is about to change to a balanced condition or an overbalanced condition. In fact, the bar following bar 403 is bar 404, which has a slope of zero, indicating a balanced condition.

At step 640, a set of instructions is generated based on the identified trend. The set of instructions may be a corrective action that a support personnel at the command center issues to a service personnel on the rig location. For instance, the set of instructions may include making a number of adjustments to the drilling equipment to avoid a balanced or overbalanced condition.

While the foregoing is directed to embodiments of the present invention, other and further embodiments of the invention may be devised without departing from the basic scope thereof, and the scope thereof is determined by the claims that follow.

## Claims

1. A system for communicating information between a rig location and a computer network, comprising:
the computer network disposed on a location remote from the rig location; and
a computer disposed on the rig location, wherein the computer is communicably linked to the computer network through a communication link.

2. The system of claim 1, wherein the computer is a portable computer.

3. The system of claim 1, wherein the communication link is a communication network.

4. The system of claim 3, wherein the communication network is cellular.

5. The system of claim 1, wherein the communication link comprises at least one of wire and cable.

6. The system of claim 1, wherein the computer comprises a device for transmitting and receiving audio information on a substantially real time basis.

7. The system of claim 1, wherein the computer is a handheld computer.

8. The system of claim 1, wherein the computer is a personal digital assistant ("PDA").

9. The system of claim 2, wherein the computer network comprises a computer on a command center communicably linked to the portable computer.

10. The system of claim 1, further comprising a computer on the rig location, wherein the computer is communicably linked to the computer network.

11. The system of claim 10, wherein the computer controls one or more equipment on the rig location.

12. The system of claim 2, further comprising a computer on the rig location, wherein the computer is communicably linked to the portable computer through a wireless communication network.

13. The system of claim 1, wherein the computer network comprises a plurality of computers.

14. The system of claim 1, wherein the computer network is communicably linked to a second computer network.

15. The system of claim 1, wherein the computer network comprises the Internet.

16. The system of claim 1, wherein the rig location is an off shore rig location.

17. The system of claim 1, wherein the rig location is an on shore rig location.

18. The system of claim 1, wherein the rig location is located off shore and the computer network is located on shore.

19. The system of claim 1, wherein the communication link is a satellite network.

20. The system of claim 1, wherein the communication link is a wireless network.

21. The system of claim 1, wherein the communication link is a fiber optic network.

22. The system of claim 2, wherein the portable computer is an explosion proof personal digital assistant.

23. The system of claim 2, further comprising a heads up display communicably linked to the portable computer.

24. The system of claim 2, further comprising a camera communicably linked to the portable computer.

25. The system of claim 2, wherein the portable computer comprises a camera.

26. The system of claim 2, further comprising a camera communicably linked to the portable computer; and a heads up display communicably linked to the portable computer, wherein the camera and the heads up display are mounted on a hard hat.

27. The system of claim 2, further comprising a camera communicably linked to the portable computer; and a heads up display communicably linked to the portable computer, wherein the camera and the heads up display are part of video conference equipment.

28. The system of claim 2, further comprising a sensor communicably linked to the portable computer.

29. The system of claim 28, wherein the sensor is one of a pressure sensor, a temperature sensor and a flow meter.

30. The system of claim 2, further comprising a sensor communicably linked to the portable computer through a wireless transceiver.

31. A method for communicating information between a rig location and a computer network disposed on a location remote from the rig location, comprising:
sending a signal to a computer within the computer network to request information;
receiving the information from the computer within the computer network; and
displaying the information at the rig location.

32. The method of claim 31, wherein displaying the information comprises displaying the information through a portable display.

33. The method of claim 31, wherein sending the signal to the computer comprises sending the signal to a command center to request information from the command center.

34. The method of claim 31, wherein the signal comprises at least one of text, audio and video.

35. The method of claim 31, wherein the information comprises a set of instructions for a rig operation.

36. The method of claim 31, wherein displaying the information comprises displaying at least one of text, still image and video through a heads up display.

37. The method of claim 31, wherein displaying the information comprises displaying at least one of text, still image and video through a display on a handheld computer.

38. The method of claim 31, wherein displaying the information comprises displaying at least one of text, still image and video through a personal digital assistant.

39. The method of claim 31, wherein displaying the information comprises broadcasting audio information.

40. The method of claim 31, further comprising capturing an image through a camera; and sending the image to the computer within the computer network.

41. The method of claim 31, further comprising capturing at least one of temperature, pressure, flow, torque and turn information; and sending the at least one of the temperature, pressure, flow, torque and turn information to the computer on the command center.

42. The method of claim 41, further comprising receiving a set of instructions regarding a rig operation in connection with the at least one of temperature, pressure, flow, torque and turn information.

43. The method of claim 31, wherein the rig operation is an offshore rig operation.

44. A method for displaying a graph indicating pressure difference between bottomhole pressure of a wellbore and formation pressure surrounding the wellbore, comprising:
receiving a bottomhole pressure inside the wellbore at a predetermined depth;
comparing the bottomhole pressure with a formation pressure surrounding the wellbore at the predetermined depth; and
displaying a graphical element indicating a pressure difference between the bottomhole pressure and the formation pressure.

45. The method of claim 44, wherein displaying the graphical element comprises displaying a graphical element having a first color to represent a condition where the bottomhole pressure is less than the formation pressure.

46. The method of claim 45, wherein the graphical element having the first color indicates an underbalanced condition.

47. The method of claim 44, wherein displaying the graphical element comprises displaying a graphical element with a negative slope to represent a condition where the bottomhole pressure is less than the formation pressure.

48. The method of claim 47, wherein the graphical element with the negative slope indicates an underbalanced condition.

49. The method of claim 44, wherein displaying the graphical element comprises displaying a graphical element with a first color and a negative slope to represent a condition where the bottomhole pressure is less than the formation pressure.

50. The method of claim 44, wherein displaying the graphical element comprises displaying a graphical element with a second color to represent a condition where the bottom hole pressure is substantially equal to the formation pressure.

51. The method of claim 50, wherein the graphical element with the second color indicates a substantially balanced condition.

52. The method of claim 44, wherein displaying the graphical element comprises displaying a bar with a zero slope to represent a condition where the bottomhole pressure is substantially equal to the formation pressure.

53. The method of claim 52, wherein the graphical element with the zero slope indicates a substantially balanced condition.

54. The method of claim 44, wherein displaying the graphical element comprises displaying a graphical element with a second color and a slope of zero to represent a condition where the bottom hole pressure is substantially equal to the formation pressure.

55. The method of claim 44, wherein displaying the graphical element comprises displaying a graphical element with a third color to represent a condition where the bottomhole pressure is greater than the formation pressure.

56. The method of claim 55, wherein the graphical element with the third color indicates an overbalanced condition.

57. The method of claim 44, wherein displaying the graphical element comprises displaying a graphical element with a positive slope to represent a condition where the bottomhole pressure is greater than the formation pressure.

58. The method of claim 57, wherein the graphical element with the positive slope indicates an overbalanced condition.

59. The method of claim 44, wherein displaying the graphical element comprises displaying a graphical element with a third color and a positive slope to represent a condition where the bottomhole pressure is greater than the formation pressure.

60. The method of claim 44, wherein receiving the bottomhole pressure comprises receiving the bottomhole pressure during at least one of a measurements while drilling operation and an underbalanced operation.

61. A display for generating a graphical user interface, comprising:
one or more graphical elements, wherein each graphical element indicates a pressure difference between a bottomhole pressure of a wellbore at a predetermined depth and a formation pressure surrounding the well bore; and
wherein at least one of the graphical elements represents at least one of an underbalanced condition, a balanced condition and an overbalanced condition.

62. The display of claim 61, wherein the at least one of the graphical elements that represents the underbalanced condition comprises a first color.

63. The display of claim 61, wherein the at least one of the graphical elements that represents the underbalanced condition comprises a bar having a negative slope.

64. The display of claim 61, wherein the at least one of the graphical elements that represents the underbalanced condition comprises a bar having a first color and a negative slope.

65. The display of claim 61, wherein the at least one of the graphical elements that represents the balanced condition comprises a second color.

66. The display of claim 61, wherein the at least one of the graphical elements that represents the balanced condition comprises a bar having a zero slope.

67. The display of claim 61, wherein the at least one of the graphical elements that represents the balanced condition comprises a bar having a second color and a zero slope.

68. The display of claim 61, wherein the at least one of the graphical elements that represents the overbalanced condition comprises a third color.

69. The display of claim 61, wherein the at least one of the graphical elements that represents the overbalanced condition comprises a bar having a positive slope.

70. The display of claim 61, wherein the at least one of the graphical elements that represents the overbalanced condition comprises a bar having a third color and a positive slope.

71. A method for controlling a drilling operation, comprising:
reviewing a display of one or more graphical elements, wherein each graphical element indicates a pressure difference between a bottomhole pressure of a well bore at a predetermined depth and a formation pressure surrounding the wellbore;
identifying a trend on the graphical elements; and
generating a set of instructions based on the trend.

72. The method of claim 71, wherein at least one of the graphical elements represents at least one of an underbalanced condition, a balanced condition and an overbalanced condition.

73. The method of claim 72, wherein the at least one of the graphical elements that represents the underbalanced condition comprises a bar having a first color and a negative slope.

74. The method of claim 72, wherein the at least one of the graphical elements that represents the balanced condition comprises a bar having a second color and a zero slope.

75. The method of claim 72, wherein the at least one of the graphical elements that represents the overbalanced condition comprises a bar having a third color and a positive slope.

76. The method of claim 71, wherein identifying the trend comprises identifying the trend based on the color and slope of the graphical elements.

77. The method of claim 71, wherein the drilling operation is an underbalanced drilling operation.

78. The method of claim 71, wherein the set of instructions comprises one or more actions to adjust a drilling equipment to avoid one of a balanced and an overbalanced condition.
